# EUROPEAN PATENT APPLICATION

(11) **EP 3 451 017 A1**
(43) Date of publication of application: **06.03.2019**
(21) Application number: 17188251.7
(22) Date of filing: 29.08.2017
(51) Int. Cl.: G01S 13/72, G01S 13/93, G01S 13/86, G01S 13/58

(54) **ROAD-SPECIFIC OBJECT ESTIMATION**

(71) Applicant: Veoneer Sweden AB, 447 83 Vårgårda (SE)
(72) Inventor: Kellner, Dominik, 85221 Dachau (DE); Schneider, Nicolas, 80634 München (DE)
(74) Representative: Sandstedt, Jonas Sven James

(57) **Abstract**

The present disclosure relates to a vehicle environment detection system (2) arranged to be mounted to an ego vehicle (1) adapted to be running on a road (103) that has a certain road course. The vehicle environment detection system (2) comprises a control unit (4) and at least one sensor arrangement (3) that is adapted to provide measurement data (28, 32), comprising object measurement data (32), related to at least one target object (6) travelling on the road (103). The control unit (4) is arranged to track said target object (6) such that a generic motion model of said target object (6) can be determined by means of said object measurement data (32), where the generic motion model assumes a constant heading of said target object (6). The control unit (4) is arranged to determine road course relative the ego vehicle (1) and to track said target object (6) for different determined road courses such that a road-specific motion model of said target object (6) is obtained.

## Description

### DESCRIPTION OF THE DISCLOSURE

The present disclosure relates to a vehicle environment detection system arranged to be mounted to an ego vehicle adapted to be running on a road with a certain road course. The vehicle environment detection system comprises a control unit arranged to track a target object such that a generic motion model of said target object can be determined, where a constant heading of the target object is assumed.

Today, vehicle environment detection systems, such as for example camera systems, Doppler radar systems and LIDAR systems, can be mounted on a vehicle in order to detect objects in order to implement automated vehicle systems such as speed control and collision prevention, as well as other such as auto alignment, ego motion estimation, scene understanding, lane keeping assist (LKA) and automated driving (AD).

LIDAR and Radar systems are arranged to produce output comprising a series of reflection points as measured by radar sensors. These reflection points can be treated as separate detections or grouped as tracked objects, providing a common motion state for an extended object.

Camera systems present image data comprising a plurality of image pixels representing detected images.

The obtained information confers information of relevant objects, e.g. vehicles, pedestrians, road boundaries etc. This information is further called object states and can for example constitute position states such as the distance from the host vehicle to the object in Cartesian coordinates. The object states can also constitute position states such as motion states such as velocity and acceleration in Cartesian coordinates.

A possible implementation is a Kalman Filter, where measurements are used to determine the object states. The object states are then predicted to the next measurement point in time and updated by the measurement.

However, when entering a curve, it is of importance that the obtained object states continue to reflect the reality.

EP 2562060 discloses predicting a target object's future movement using sensors such as cameras, Radar, Lidar, and/or other sensors capable of deriving information from the host vehicle and especially its environment. Examples mentioned are traffic-lights, traffic-signs, road-markings that can indicate curvature.

It is, however, desired to provide a vehicle environment detection system that is adapted to perform object tracking, such that motion states of one or more objects can be determined in a more accurate and reliable manner than previously described, which also is an object of the present disclosure.

Said object is achieved by means of a vehicle environment detection system arranged to be mounted to an ego vehicle adapted to be running on a road with a certain road course. The vehicle environment detection system comprises a control unit and at least one sensor arrangement that is adapted to provide measurement data, comprising object measurement data, related to at least one target object travelling on the road. The control unit is arranged to track a target object such that a generic motion model of said target object can be determined, by means of said object measurement data, where the generic motion model assumes a constant heading of said target object. The control unit is arranged to determine road course relative the ego vehicle and to track the target object for different determined road courses such that a road-specific motion model of said target object is obtained.

Said object is also achieved by means of a method for a vehicle environment detection system, where the method comprises: Obtaining measurement data, comprising object measurement data, related to at least one target object travelling on a road that has a certain road course, and tracking said target object such that a generic motion model of said target object can be determined by means of said object measurement data. The generic motion model assumes a constant heading of said target object. The method further comprises:
Determining road course relative an ego vehicle, and tracking said target object for different determined road courses such that a road-specific motion model of said target object is obtained.

According to some aspects, the control unit is arranged to determine the target object's position and motion state by means of multiple model temporal filtering.

According to some aspects, the vehicle environment detection system comprises a positioning system that in turn comprises digitally stored map data. At least one of road-specific measurement data comprised in said measurement data and GPS (Global Positioning System) data constitute input data to the control unit for determining the road course.

According to some aspects, the control unit is arranged to select either the generic motion model, the road-specific motion model, or a combination of both in order to determine a total target state of the target object.

According to some aspects, a road course is defined by at least one of a road curvature and a tangent of the road curvature at said target vehicle relative to the ego vehicle.

Other examples are disclosed in the dependent claims.

A number of advantages are obtained by means of the present disclosure. Mainly, a more accurate and reliable motion state of other traffic participants is obtained, resulting in an improved performance for safety and/or cruising features as well as for automated driving. By incorporating road information, the motion state has a higher dynamic, since non-linear movement e.g. yaw rate due to a curve, is directly injected by the road information. Further, possible dynamics are restricted to the road direction, resulting in that the movement is damped and/or restricted orthogonally, resulting in a more stable trajectory.

### BRIEF DESCRIPTION OF THE DRAWINGS

The present disclosure will now be described more in detail with reference to the appended drawings, where:
- Figure 1: shows a schematic top view of an ego vehicle and a target object;
- Figure 2: shows a schematic top view of an ego vehicle and a target vehicle;
- Figure 3: shows a schematical top view of a first example a of a predicted detection;
- Figure 4: shows a schematical top view of a second example a of a predicted detection;
- Figure 5: shows a schematical top view of a first example a of an updated detection;
- Figure 6: shows a schematical top view of a second example a of an updated detection;
- Figure 7: shows a schematical view of the present disclosure; and
- Figure 8: shows a flowchart for methods according to the present disclosure.

### DETAILED DESCRIPTION

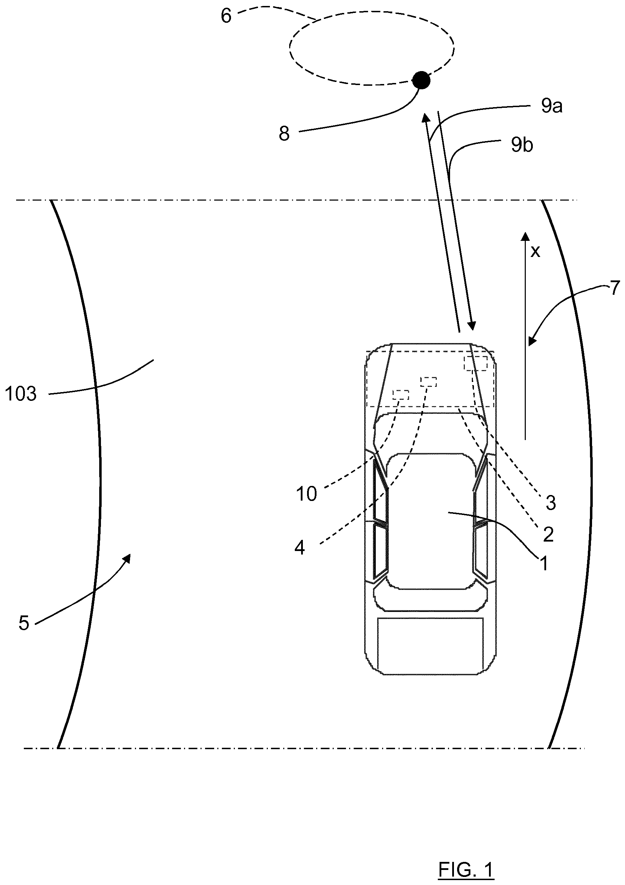

With reference to Figure 1, showing a top view of an ego vehicle 1, the ego vehicle 1 comprises a vehicle environment detection system 2 that in turn comprises a radar sensor arrangement 3 and a control unit 4.

The radar sensor arrangement 3 is arranged to acquire measurement data by means of measurements, and acquired sensor data is handled by means of the control unit 4, where the acquirement of measurement data and sensor data handling is performed in radar cycles. According to some aspects, the measurement data comprises object measurement data and road-specific measurement data, as will be explained more in detail later.

Generally, a radar cycle is one observation phase during which the vehicle environment detection system 2 is arranged to acquire data, process said data on several signal processing levels and to send out available results. This can be a fixed time interval (i.e. 40 to 60 milliseconds), or it can be a dynamic time interval depending on environment conditions and processing load.

In Figure 1, the ego vehicle 1 is travelling on a road 103, here in a road lane 5 behind a target object 6 along an x-direction 7, and the radar sensor arrangement 3 is arranged to obtain object measurement data by detecting radar detections 8 by means of transmitted radar signals 9a and received radar signals 9b. The control unit 4 is arranged to track the target object 6 such that motion states of the target object 6 can be determined by means of obtained object measurement data, resulting in a generic motion model of the target object 6. The generic motion model does not relate to road course according to the below, but relates to a constant heading (e.g. constant velocity model) of the target object 6.

The vehicle environment detection system 2 further comprises a positioning system 10, in this example in the form of a GPS (Global Positioning System) arrangement, comprising digitally stored map data.

According to the present disclosure, the control unit 4 is arranged to determine the road course, such as for example road curvature 101, a tangent 105 of the road curvature 101 at the target object 6 relative to the ego vehicle 1, and heading, by means of said positioning system 10 and acquired road-specific measurement data, and to track the target object 6 for different determined road courses by means of multiple model temporal filtering, resulting in a road-specific motion model of the target object 6, where determined road courses constitute input data.

The control unit 4 is arranged to determine if the generic motion model, the road-specific motion model, or a combination both should be used in a specific situation in order to achieve the most accurate total target state of the target object 6. The generic motion model does not take road course into account, but assumes a constant heading.

This determining is according to some aspects based on road information, e.g. entering a round-about, and/or said measurement data, both generic and road-specific.

To detect exceptions such as lane changes, off-road vehicles, road users that violate traffic rules as well vehicles which are not affected by traffic rules e.g. police, the generic motion model can be used in combination with the road-specific motion model. This can for example be done by means of a Multiple Model Filter, which calculates the motion states for both models and outputs the more likely or a weighted mixture of both models.

The generic motion model always has to be determined in parallel with the road-specific motion model, enabling the vehicle environment detection system 2 to cover potential dangerous situations.

This will be described by means of a number of examples.

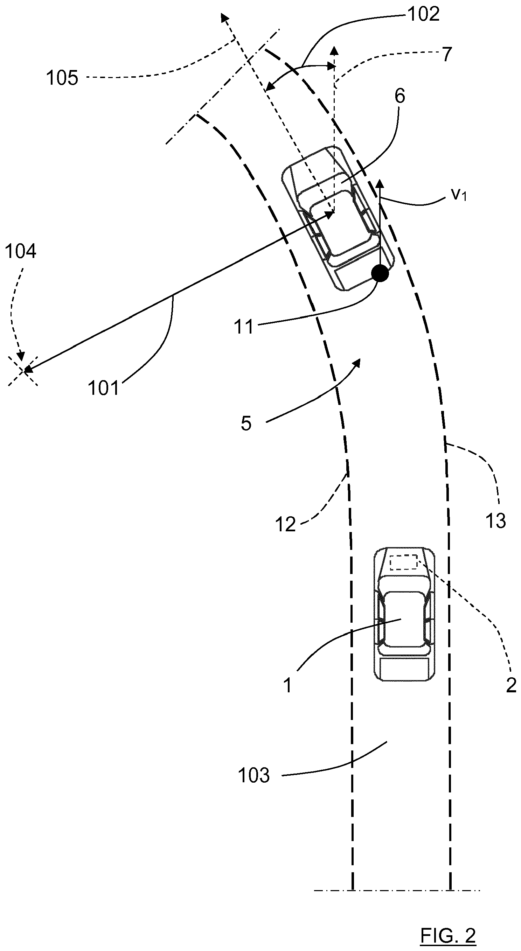

With reference to Figure 2, the ego vehicle 1 is travelling on the road lane 5 behind a target object 6 in the form of a target vehicle 6. The target vehicle 6 has been detected by the vehicle environment detection system 2, and a current estimated tracked and updated detection 11, constituting an object measurement, that has been updated in a last radar cycle is shown, having a certain estimated positon and a certain estimated velocity vector v₁. During update, the track state, e.g. position, is updated with the current measurement, e.g. measured position.

Here, there are boundaries 12, 13 of the road lane 5 that are derived by the control unit 4 by means of said positioning system 10. The curvature 101 of the road and the tangent 105 of the road curvature at the target vehicle 6 relative to the ego vehicle 1 is determined, where the curvature 101 is constituted by a road curvature radius from a curvature circle center 104, and where the tangent 105 of the road curvature 101 is perpendicular to the road curvature 101. A road angle 102 is defined between the x-direction 7 and the tangent 105. The target vehicle 6 has a heading that is parallel to the tangent 105.

In the following, the target vehicle 6 will not be shown for reasons of clarity, only measured, predicted and updated detections, but of course the target vehicle is assumed to be present. The ego vehicle 1 is not shown as well for the same reasons, only the vehicle environment detection system 2 is schematically indicated.

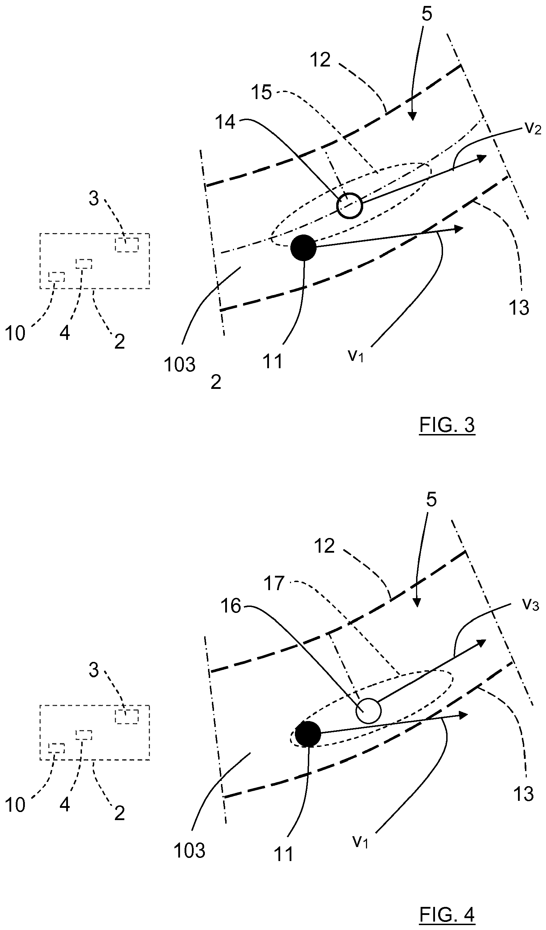

With reference also to Figure 3, the current estimated tracked detection 11 after an update in a last radar cycle is shown together with a first example of a following prediction 14 is shown with a determined road angle 102 tangent 105 taken into account. For this prediction 14, it is assumed that it is positioned on center of the road lane 5, having a predicted velocity vector v₂ that is parallel to the road course. For the prediction, calculation of the covariance is taking the determined degree of curvature into account as shown with the dashed oval 15, allowing a larger movement in the road direction than orthogonal to it.

With reference also to Figure 4, a second example of a following prediction 16 is shown with the road angle 102 taken into account. For this prediction 16, a predicted velocity vector v₃ is parallel to the road course. For the prediction, calculation of the covariance is taking the determined degree of curvature into account as shown with the dashed oval 17, allowing a larger movement in the road direction than orthogonal to it.

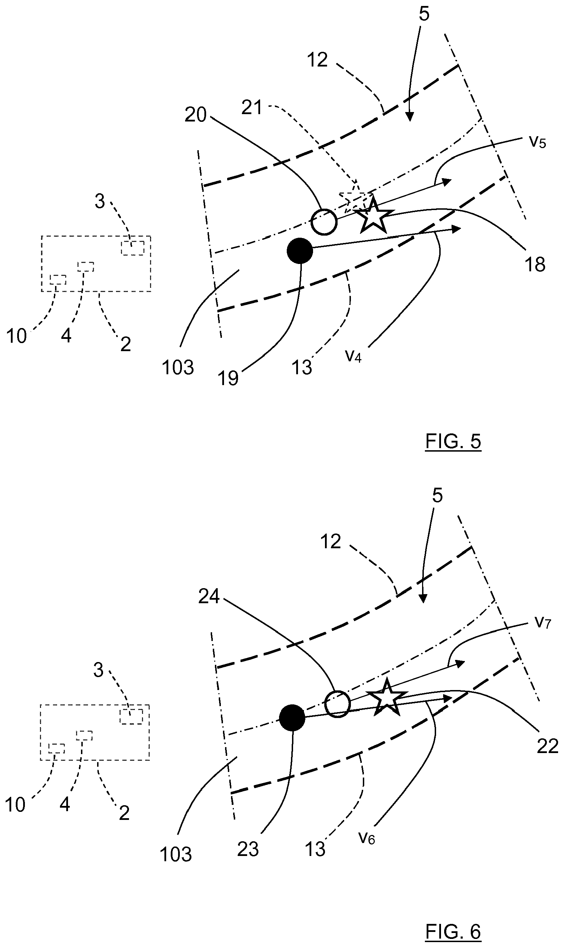

In Figure 5, the radar sensor arrangement 3 has obtained a radar detection 18, constituting an object measurement, as shown with a solid star. A current estimated prediction 19 of a track after a prediction in a last radar cycle is shown together with a first example of an updated current estimated prediction 20 with a determined degree of curvature taken into account. The prediction 19 and the updated prediction 20 both have a certain corresponding estimated positon and a certain estimated velocity vector v₄, v₅.

In the first example, the updated prediction 20 is determined using a pseudo detection or pseudo measurement 21 shown with a dashed star where it is assumed that that the target vehicle drives in the center of the road lane 5 orthogonal to road course. A pseudo measurement is derived from the road course and included to influence the motion state. For example, acceleration which is not measured by any sensor arrangement can be included in the pseudo measurement, by calculating the acceleration based on the velocity of the target vehicle 6 and the road curvature 101.

In Figure 6, the situation of Figure 5 is shown, where the radar sensor arrangement 3 has obtained a radar detection 22, constituting an object measurement, as shown with a solid star, and there is also shown a prediction 23 having a certain estimated velocity vector v₆. As in Figure 5, it is assumed that that the target vehicle drives in the center of the road lane 5. During the update, a soft constraint is used to set the velocity of the target vehicle parallel to the road heading. An estimated velocity vector v₇ of an updated track 24 is then kept parallel to the road heading.

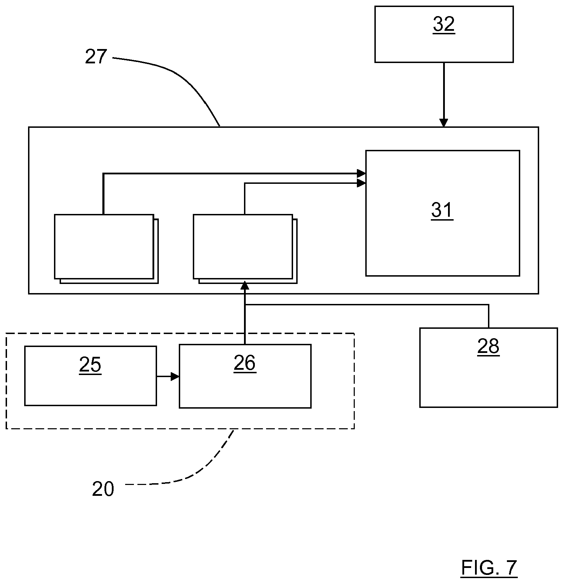

In Figure 7, a schematical view of an example of the present disclosure is provided. The GPS arrangement 20 comprises a GPS receiver unit 25 and digitally stored map data 26 and is input to a multiple model Kalman filter arrangement 27.

In accordance with the present disclosure, the degree of road curvature is determined either by means of a GPS arrangement 20 and/or by means of at least a part of acquired road-specific measurement data from the radar sensor arrangement 3, which determines the road course e.g. by stationary radar detections. Therefore, in Figure 7, road-specific measurement data 28 is also input to the multiple model Kalman filter arrangement 27.

It is to be noted that either the GPS arrangement 20 or said road-specific measurement data 28 is present as input to the multiple model Kalman filter arrangement 27, or alternatively both are present as input to the multiple model Kalman filter arrangement 27.

The multiple model Kalman filter arrangement 27 is adapted to receive the relevant input from the GPS arrangement 20 and or said road-specific measurement data 28 in a first motion model unit 29 that is arranged to determine a road-specific motion model for each target object. The multiple model Kalman filter arrangement 27 also comprises a generic motion model unit 30 and a multiple model filter unit 31 containing the state of the generic and one/multiple road specific model/models for each target object.

The first motion model unit 29 and the generic motion model unit 30 are connected to the multiple model filter unit 31. The multiple model Kalman filter arrangement 27 also receives object measurement data 32 obtained from single or multiple sensors comprised in the ego vehicle 1, according to some aspects said radar sensor arrangement 3. This object measurement data 32 is not road-specific, and is used by both motion model units 29, 30 since they require data relating to the position of the target vehicle 6.

Said measurement data 28, 32, object and road-specific data, is generally obtained from a camera sensor arrangement, and/or a LIDAR sensor arrangement and/or a radar sensor arrangement depending on which sensors arrangements that are present at the ego vehicle 1, and which sensors arrangements that are used for providing lane and road information for determining road course, such as road curvature.

All calculations, processes etc. are assumed to be performed by means of the control unit 4. Generally, the control unit 4 can be comprised by one or more separate or integrated control units.

Other types of multiple model temporal filter are of course possible, not only Kalman filters, Generally, the control unit 4 is arranged to determine a degree of road curvature and to track a detected target object for different determined degrees of curvature by means of multiple model temporal filtering where determined road curvature and at least a part of said measurement data constitute input data.

Generally, not only the rear part of the target vehicle 6 can be detected, but any part.

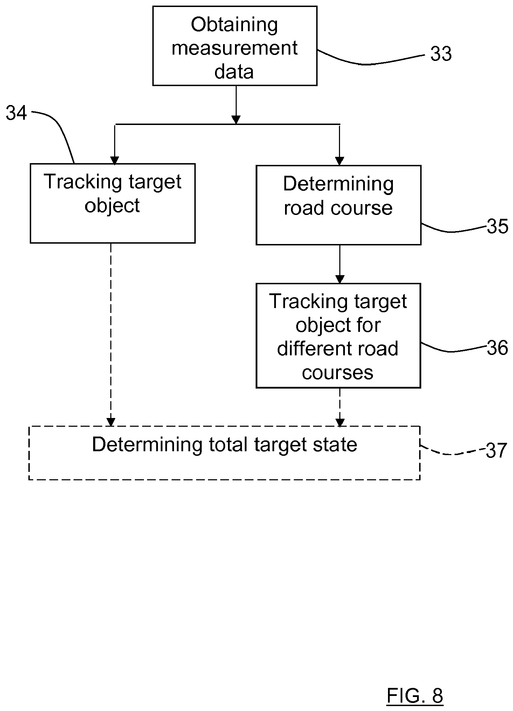

With reference to Figure 8, the present disclosure relates to a method for a vehicle environment detection system 2. The method comprises:
33: Providing measurement data 28, 32, comprising object measurement data 32, related to at least one target object 6 travelling on a road 103 that has a certain road course.
34: Tracking said target object 6 such that a generic motion model of said target object 6 can be determined by means of said object measurement data, where the generic motion model assumes a constant heading of said target object 6.
35: Determining road course relative an ego vehicle 1.
36: Tracking said target object 6 for different determined road courses such that a road-specific motion model of said target object 6 is obtained.

According to some aspects, the method further comprises selecting one of:
- said generic motion model;
- said road-specific model; or
- a combination of both
for
37: determining a total target state of the target object 6.

The present disclosure is not limited to the examples above, but may vary freely within the scope of the appended claims. For example, the vehicle environment detection system 2 comprises at least one sensor arrangement 3, where said sensor arrangement according to some aspects are constituted by at least one of a radar sensor arrangement, a LIDAR sensor arrangement and a camera sensor arrangement.

In this context a road lane is a limited lane on the road having certain boundaries 12, 13. The boundaries can either be imaginary boundaries that limit the lane, or be constituted by road markings. Imaginary boundaries can be obtained from a digital map or a radar sensor arrangement, and road marking boundaries can be obtained by means of a camera sensor arrangement.

The multiple model temporal filter is according to some aspects constituted by Interacting Multiple Models (IMM)) which, beside a generic motion model, has a road/lane specific model for each road user.

According to some aspects, the generic model assumes a constant heading, assuming a continued straight driving, and the road specific model assumes that the target follows the road, e.g. in a curve, a drive curve model is assumed.

According to some aspects, the heading of the target vehicle 6 is set to the current lane direction or yaw rate based on velocity and curve radius, according to some aspects by a pseudo measurement or soft constraint.

According to some aspects, intersections, roundabouts, turnings, curves and the like are used to allow higher lateral or longitudinal maneuvers by adaption of a Q-matrix in a Kalman filter.

According to some aspects, a coordinated turn model is used, and the curvature is used to model a relationship between speed and yaw rate, constituting a motion constraint in a prediction step.

According to some aspects, the transition probability between models is adapted to increase likelihood of a specific model switch, alternatively weights and transitions are set probabilistic e.g. by modelling the influence of road information with additional latent variables and observables in a mixed discrete-continuous dynamic Bayesian network.

By means of the present disclosure, information regarding lane and/or road course obtained from sensor arrangements and/or digital maps, but as well information like crossings, roundabouts etc. are incorporated, using a standard state-of-the art interacting multiple model filter. but incorporate this information to:
- Adapt states, e.g. use heading/curvature or the road for motion constraints and/or pseudo measurements.
- Allow higher process noise, e.g. lateral in curves, roundabouts and crossings, in a temporal filter in some models to allow more dynamic maneuvers.
- Adapt weights/transition probabilities between the different models in a multiple model filters, e.g. adapt transition matrix between different models. According to some aspects, when entering a roundabout, a transition probability from straight road model to curve model is increased, and inside a roundabout, a transition probability from curve to straight road model is decreased.

Generally, the present disclosure is also applicable for approaching target vehicles from the rear or the side which also can be detected, e.g. for blind spot detection and intersection assist. Each of the ego vehicle 1 and the target vehicle 6 can therefore move in any direction in any road lane on the road 103. Therefore, generally, the control unit 4 is arranged to determine the road course, such as for example road curvature 101 or the tangent 105 of the road curvature 101 at the target vehicle 6 relative to the ego vehicle 1.

Generally, tracking means determining the position and motion state of a target object and consists of two main steps; "Prediction over time" and "Update with measurement". Both these steps can be performed by either:
1) A generic motion model, e.g. constant velocity where the model assumes that the driver does not accelerate.
2) A road-specific motion model, e.g. it is assumed that the driver follows the road, where the prediction step is adapted, alternatively the yaw rate is calculated by speed and curve radius where the update step is adapted.

The generic motion model and the road-specific motion model run in parallel, having different motion states since their predictions and updates typically are mutually different.

Generally, the present disclosure relates to a vehicle environment detection system 2 arranged to be mounted to an ego vehicle 1 adapted to be running on a road 103 that has a certain road course, where the vehicle environment detection system 2 comprises a control unit 4 and at least one sensor arrangement 3 that is adapted to provide measurement data 28, 32, comprising object measurement data 32, related to at least one target object 6 travelling on the road 103, where the control unit 4 is arranged to track said target object 6 such that a generic motion model of said target object 6 can be determined by means of said object measurement data 32, where the generic motion model assumes a constant heading of said target object 6. The control unit 4 is arranged to determine road course relative the ego vehicle 1 and to track said target object 6 for different determined road courses such that a road-specific motion model of said target object 6 is obtained.

According to some aspects, the control unit 4 is arranged to determine the target object's position and motion state by means of multiple model temporal filtering.

According to some aspects, the vehicle environment detection system 2 comprises a positioning system 10 that in turn comprises digitally stored map data 26, where at least one of
- road-specific measurement data 28 comprised in said measurement data 28, 32; and
- GPS (Global Positioning System) data
constitute input data to the control unit 4 for determining the road course.

According to some aspects, the control unit 4 is arranged to select either:
the generic motion model;
the road-specific motion model; or
a combination of both
in order to determine a total target state of the target object 6.

According to some aspects, the control unit 4 is arranged to perform said selection at least partly in dependence of said measurement data 28, 32.

According to some aspects, the control unit 4 is arranged to determine said road-specific motion model with respect to the current lane direction or yaw rate based on velocity and curve radius by means of pseudo measurements or soft constraints.

According to some aspects, a road course is defined by at least one of a road curvature 101 and a tangent 105 of the road curvature 101 at said target vehicle 6 relative to the ego vehicle 1.

Generally, the present disclosure also relates to a method for a vehicle environment detection system 2, where the method comprises:
33: providing measurement data 28, 32, comprising object measurement data 32, related to at least one target object 6 travelling on a road 103 that has a certain road course; and
34: tracking said target object 6 such that a generic motion model of said target object 6 can be determined by means of said object measurement data, where the generic motion model assumes a constant heading of said target object 6;
35: determining road course relative an ego vehicle 1; and
36: tracking said target object 6 for different determined road courses such that a road-specific motion model of said target object 6 is obtained.

According to some aspects, the method further comprises determining the target object's position and motion state by using multiple model temporal filtering.

According to some aspects, at least one of
- road-specific measurement data 28 comprised in said measurement data 28, 32; and
- GPS (Global Positioning System) data
constitutes input data for determining the road course.

According to some aspects, the method further comprises selecting one of:
- said generic motion model;
- said road-specific model; or
- a combination of both
for:
37: determining a total target state of the target object 6.

According to some aspects, the method further comprises performing said selecting at least partly in dependence of said measurement data 28, 32.

According to some aspects, the method further comprises determining said road-specific motion model with respect to the current lane direction or yaw rate based on velocity and curve radius by means of pseudo measurements or soft constraints.

According to some aspects, a road course is defined by at least one of a road curvature 101, and a tangent 105 of the road curvature 101 at said target vehicle 6 relative to the ego vehicle 1.

## Claims

1. A vehicle environment detection system (2) arranged to be mounted to an ego vehicle (1) adapted to be running on a road (103) that has a certain road course, where the vehicle environment detection system (2) comprises a control unit (4) and at least one sensor arrangement (3) that is adapted to provide measurement data (28, 32), comprising object measurement data (32), related to at least one target object (6) travelling on the road (103), where the control unit (4) is arranged to track said target object (6) such that a generic motion model of said target object (6) can be determined by means of said object measurement data (32), where the generic motion model assumes a constant heading of said target object (6), **characterized in that** the control unit (4) is arranged to determine road course relative the ego vehicle (1) and to track said target object (6) for different determined road courses such that a road-specific motion model of said target object (6) is obtained.

2. The vehicle environment detection system (2) according to claim 1, **characterized in that** the control unit (4) is arranged to determine the target object's position and motion state by means of multiple model temporal filtering.

3. The vehicle environment detection system (2) according to any one of the claims 1 or 2, **characterized in that** the vehicle environment detection system (2) comprises a positioning system (10) that in turn comprises digitally stored map data (26), where at least one of
- road-specific measurement data (28) comprised in said measurement data (28, 32); and
- GPS, Global Positioning System, data
constitute input data to the control unit (4) for determining the road course.

4. The vehicle environment detection system (2) according to any one of the previous claims, **characterized in that** the control unit (4) is arranged to select either:
the generic motion model;
the road-specific motion model; or
a combination of both
in order to determine a total target state of the target object (6).

5. The vehicle environment detection system (2) according to claim 4, **characterized in that** the control unit (4) is arranged to perform said selection at least partly in dependence of said measurement data (28, 32).

6. The vehicle environment detection system (2) according to any one of the previous claims, **characterized in that** the control unit (4) is arranged to determine said road-specific motion model with respect to the current lane direction or yaw rate based on velocity and curve radius by means of pseudo measurements or soft constraints.

7. The vehicle environment detection system (2) according to any one of the previous claims, **characterized in that** a road course is defined by at least one of a road curvature (101) and a tangent (105) of the road curvature (101) at said target vehicle (6) relative to the ego vehicle (1).

8. A method for a vehicle environment detection system (2), where the method comprises:
(33) providing measurement data (28, 32), comprising object measurement data (32), related to at least one target object (6) travelling on a road (103) that has a certain road course; and
(34) tracking said target object (6) such that a generic motion model of said target object (6) can be determined by means of said object measurement data, where the generic motion model assumes a constant heading of said target object (6);
**characterized in that** the method further comprises:
(35) determining road course relative an ego vehicle (1); and
(36) tracking said target object (6) for different determined road courses such that a road-specific motion model of said target object (6) is obtained.

9. The method according to claim 8, **characterized in that** the method further comprises determining the target object's position and motion state by using multiple model temporal filtering.

10. The method according to any one of the claims 8 or 9, **characterized in that** at least one of
- road-specific measurement data (28) comprised in said measurement data (28, 32); and
- GPS, Global Positioning System, data
constitutes input data for determining the road course.

11. The method according to any one of the claims 8-10, **characterized in that** the method further comprises selecting one of:
- said generic motion model;
- said road-specific model; or
- a combination of both
for:
(37) determining a total target state of the target object (6).

12. The method according to claim 11, **characterized in that** the method further comprises performing said selecting at least partly in dependence of said measurement data (28, 32).

13. The method according to any one of the claims 8-12, **characterized in that** the method further comprises determining said road-specific motion model with respect to the current lane direction or yaw rate based on velocity and curve radius by means of pseudo measurements or soft constraints.

14. The method according to any one of the claims 8-13, **characterized in that** a road course is defined by at least one of a road curvature (101), and a tangent (105) of the road curvature (101) at said target vehicle (6) relative to the ego vehicle (1).
